# EUROPÄISCHE PATENTSCHRIFT

(11) **EP 0 781 466 B1**
(45) Veröffentlichungstag und Bekanntmachung des Hinweises auf die Patenterteilung: **21.04.1999**
(21) Anmeldenummer: 95928957.0
(22) Anmeldetag: 22.08.1995
(51) Int. Cl.: H02P 6/12

(54) **SCHALTUNG UND VERFAHREN FÜR DIE ANSTEUERUNG EINES BÜRSTENLOSEN GLEICHSTROMMOTORS**
CIRCUIT AND METHOD FOR THE CONTROL OF A BRUSHLESS D.C. MOTOR
PROCEDE ET CIRCUIT DE COMMANDE D'AMORCAGE D'UN MOTEUR A COURANT CONTINU SANS BALAIS

(30) Priorität: 13.09.1994 DE 4432530
(43) Veröffentlichungstag der Anmeldung: 02.07.1997
(73) Patentinhaber: ROBERT BOSCH GMBH, 70442 Stuttgart (DE)
(72) Erfinder: KERN, Robert, D-77887 Sasbachwalden (DE); SOELLNER, Michael, D-77836 Rheinmünster (DE)
(86) Internationale Anmeldenummer: DE9501106
(87) Internationale Veröffentlichungsnummer: WO9608864

(56) Entgegenhaltungen:
- EP-A- 0 482 913
- DE-A- 4 204 351

## Beschreibung

### STAND DER TECHNIK

Die Erfindung betrifft eine Schaltung und ein Verfahren zur Ansteuerung eines bürstenlosen Gleichstrommotors.

Ein derartiger Gleichstrommotor ist z.B. in EP-A-O 482 913 offenbart. Hier wird für die Ansteuerung des bürstenlosen Gleichstrommotors die Drehstellung seines Rotors durch Erfassen der Nulldurchgänge der elektromotorischen Gegenkraft bestimmt, die in den Statorwicklungen durch den rotierenden Rotor induziert wird. Ein Signalgenerator erzeugt daraufhin ein trapezförmiges Signal, das nach Verstärkung an die jeweiligen Statorwicklungen gelegt wird, um eine sanfte Stromkommutierung der Statorwicklungen zu bewirken. Dadurch wird ein leiser Lauf des Motors erreicht.

Aus der DE-A-42 04 351 ist eine Schaltungsanordnung zum Betreiben eines Mehrphasen-Synchronmotors an einem Gleichspannungsnetz bekannt. Über eine Mehrzahl gesteuerter Schalter lassen sich die Wicklungsphasen der Ankerwicklung sukzessive an die Netzgleichspannung anschließen. Eine Kommutierungsvorrichtung erzeugt in Abhängigkeit von der Rotordrehstellung Kommutierungssignale, die aus periodischen Rechteckimpulsen zusammengesetzt sind und zur Ansteuerung der Schalter dienen. Zur Reduzierung des Kommutierungsgeräusches und der Funkstörung sind die Rechteckimpulse der Kommutierungssignale in ihrer Flankensteilheit gedämpft. Eine detailierte Beschreibung der Erzeugung der trapezförmigen Signale erfolgt jedoch nicht.

### VORTEILE DER ERFINDUNG

Die erfindungsgemäße Schaltung mit den Merkmalen des Hauptanspruchs und das erfindungsgemäße Verfahren mit den kennzeichnenden Merkmalen des Anspruchs 9 haben den Vorteil, daß die Steilheit der Stromflanken der einzelnen Spannungsblöcke veränderbar ist. Dies führt zu einer Verringerung der Kommutierungsgeräusche. Es lassen sich weiterhin flache Flanken einstellen, wodurch ein leiser Lauf des Motors gewährt wird. Außerdem bieten flachere Flanken den Vorteil geringerer Induktionsspitzen beim Abschalten der Stromimpulse. Somit wird die Auswertung der in den drei Phasen eines bürstenlosen Gleichstrommotors induzierten Spannungen erleichtert und ein Betrieb ohne Hallsensoren ermöglicht.

Durch die in den Unteransprüchen aufgeführten Maßnahmen sind vorteilhafte Weiterbildungen und Verbesserungen der im Hauptanspruch angegebenen Schaltung bzw. des in Anspruch 9 angegebenen Verfahrens möglich.

Es ist zweckmäßig, in der Schaltung einen zusätzlichen Addierer einzusetzen zum Addieren einer Spannung U Block zu dem Wert Ul der abgetasteten und gehaltenen Dreiecksspannung, wobei dann in dem Differenzverstärker die Differenz zwischen der Dreiecksspannung und der Summe aus Haltespannung Ul und Blockspannung U Block verstärkt wird. Dies ermöglicht neben der Einstellbarkeit der Flankensteilheit zusätzlich eine Verringerung der Länge der einzelnen Spannungsblöcke und somit einen leisen Lauf bei niedrigen Drehzahlen durch sehr flache Ansteuerflanken und gleichzeitig eine Verbesserung des Wirkungsgrades bei höheren Drehzahlen durch die Möglichkeit, Stromlücken zwischen den einzelnen Spannungsblöcken zuzulassen.

Ein weiterer Vorteil besteht darin, daß sich die Schaltung in einem integrierten Schaltkreis einfach realisieren läßt. Um die Spitzen der Dreiecksspannung zu "brechen", wählt man vorteilhafterweise die obere Stellgrenze des Differenzverstärkers derart, daß sie niedriger ist als der maximale verstärkte Wert der Dreiecksspannung. Dies führt zu einem horizontalen zeitlichen Spannungsverlauf des verstärkten Signals während der Zeit, in der die verstärkte Differenzspannung die obere Stellgrenze des Differenzverstärkers übersteigt. Dies erhöht ebenfalls den Wirkungsgrad.

Für eine flexible und einfache Einstellung der Länge der Spannungsblöcke liegt der Wert der addierten Blockspannung U Block zwischen Null und dem maximalen Wert der Dreiecksspannung. Dadurch ist eine Einstellung, bei der keine Reduktion der Blocklänge vorliegt, also keine Stromlücken bei der Bestromung auftreten, bzw. eine Verkürzung der Blocklänge, und zwar im Extremfall bis zu einer Blocklänge von Null, möglich.

Ebenso einfach und flexibel läßt sich die Verstärkung des Differenzverstärkers und somit die Flankensteilheit einstellen.

In einer bevorzugten Ausgestaltung der Schaltung weist der Dreiecksoszillator einen Kondensator, eine erste Stromquelle zur Aufladung des Kondensators und eine zweite Stromquelle zur Entladung des Kondensators auf. Dabei handelt es sich insbesondere um Konstantstromquellen. Dadurch ist es möglich, bei der Realisierung der Schaltung mit nur einem, nicht integrierbaren Kondensator auszukommen.

Es ist zweckmäßig, die Ströme der Konstantstromquellen proportional zu der Drehzahl des Rotors zu wählen, wodurch ein idealer Dreiecksverlauf mit drehzahlproportionaler Frequenz und im wesentlichen konstanter Differenzspannung erzielt wird.

### ZEICHNUNG

Weitere Vorteile, Merkmale und Anwendungsmöglichkeiten der vorliegenden Erfindung ergeben sich aus der Zeichnung und der nachfolgenden Beschreibung eines Ausführungsbeispiels. Es zeigen:
- **Fig. 1**: ein Blockschaltbild eines Ausführungsbeispiels der erfindungsgemäßen Schaltung zur Bereitstellung von Ansteuerungssignalen,
- **Fig. 2a**: den zeitlichen Verlauf der Dreiecksspannung,
- **Fig. 2b**: den zeitlichen Verlauf der Ansteuerungsimpulse bei voller Blocklänge und veränderbarer Flankensteilheit,
- **Fig. 3a**: ebenfalls den zeitlichen Verlauf der Dreiecksspannung, und
- **Fig. 3b**: den zeitlichen Verlauf der Ansteuerungsimpulse mit verringer ter Blocklänge.

### BESCHREIBUNG EINES AUSFÜHRUNGBEISPIELS

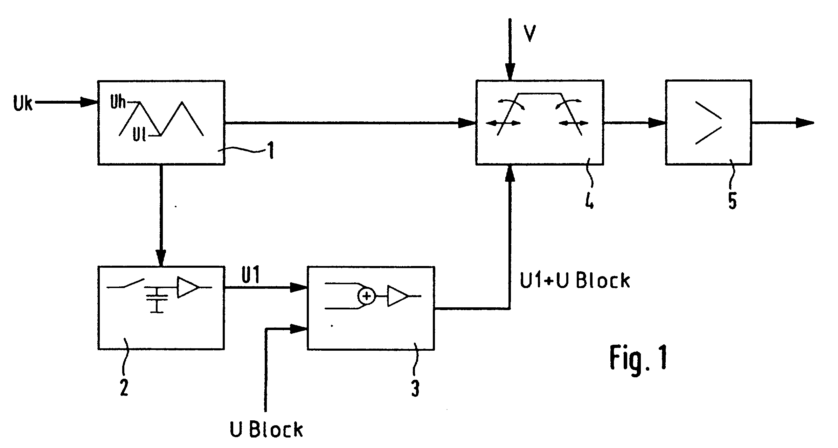

Bei dem in Fig. 1 dargestellten Ausführungsbeispiel der erfindungsgemäßen Schaltung erzeugt ein Dreiecksoszillator 1 ein Dreieckssignal. Ein Abtast-Halteschaltkreis 2 erzeugt eine Haltespannung UI, indem zum Zeitpunkt eines drehzahlabhängigen Kommutierungssignals Uk, das von einer gesonderten, nicht dargestellten Schaltung kommt, die Dreiecksspannung abgetastet wird. Dieses Haltesignal Ul wird zusammen mit dem Ausgabesignal des Dreieckssoszillators auf einen Differenzverstärker 4 gegeben, welcher die Differenz der beiden Signale verstärkt und zur Endstufe 5 der erfindungsgemäßen Ansteuerungsschaltung weitergibt. Durch eine Veränderung der Verstärkung V läßt sich die Flankensteilheit der an die Endstufe angelegten Spannungsblöcke einstellen. Dies wird durch die gebogenen Pfeile an dem trapezförmigen Spannungsblock bei 4 zum Ausdruck gebracht. Weiterhin läßt sich eine Verringerung der Blocklänge erzielen, indem man zu der Haltespannung Ul eine Blockspannung U Block in dem Addierer 3 hinzuaddiert. Dann wird an Stelle von lediglich UI die Summe UI + U Block zusammen mit der Dreiecksspannung an den Differenzverstärker 4 angelegt, und zwar die Dreiecksspannung an den positiven Eingang und die Summe UI + U Block an den negativen Eingang. Die hierdurch gewonnene Einstellbarkeit der Blocklänge ist durch die horizontalen, geraden Pfeile in dem trapezförmigen Spannungsblock bei 4 angedeutet.

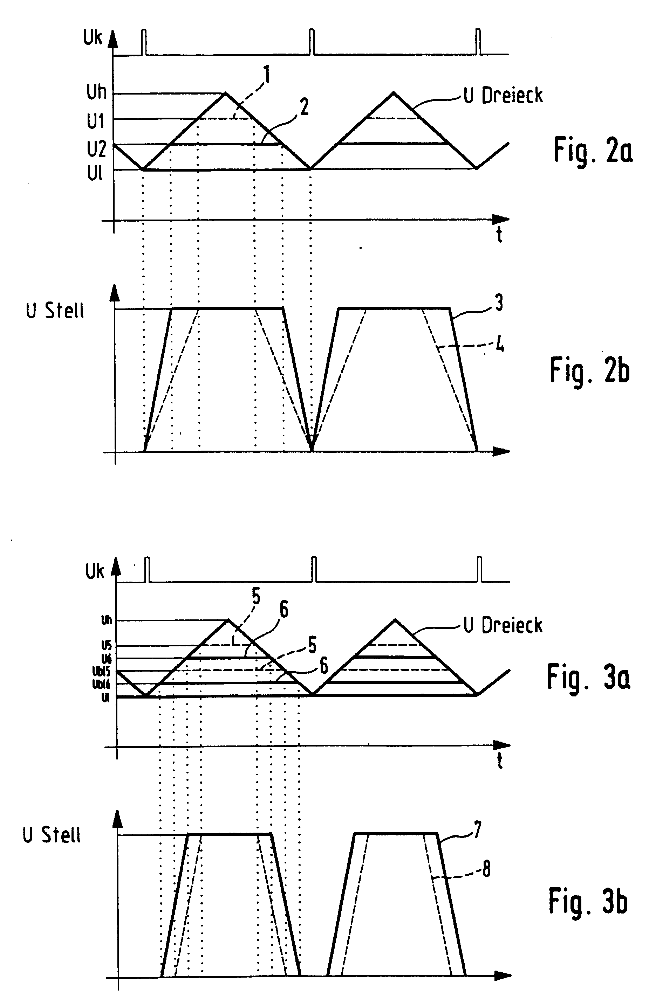

Fig. 2a zeigt den zeitlichen Verlauf der Dreiecksspannung jeweils zum Zeitpunkt eines Kommutierungsimpulses, der von einer separaten Schaltung zur Positionserfassung des Rotors kommt. Es wird ein Kondensator über eine Stromquelle aufgeladen. Bei Erreichen einer vorgegebenen Spannung Uh wird der Kondensator über eine zweite Stromquelle entladen. Die Spannung Ul stellt sich abhängig von dem Wert des Kondensators sowie den Auf- und Entladeströmen der Stromquellen ein, bei denen es sich vorzugsweise um Konstantstromquellen handelt, deren Ströme proportional mit der Drehzahl des Motors zunehmen. Bei einer Erhöhung der Motordrehzahl rükken die Kommutierungsimpulse zeitlich enger aneinander, wodurch der zeitliche Verlauf die Form spitzerer Dreiecke annimmt. Da es sich bei den Stromquellen um Konstantstromquellen handelt, liegt jedoch ein idealer Dreiecksverlauf mit praktisch konstanter Differenzspannung Uh - Ul vor, der jedoch zur Frequenz proportional ist.

Fig. 2b zeigt das Ergebnis des zeitlichen Spannungsverlaufes des durch den Differenzverstärker 4 verstärkten Differenzsignals. Das an die Eingänge des Differenzverstärkers 4 angelegte Differenzsignal besteht zum einen aus dem Dreieckssignal und zum anderen aus der in dem Abtast-Halteschaltkreis 2 erzeugten Haltespannung Ul. Wenn die Verstärkung so gewählt wird, daß bei der Differenzspannung U2 - Ul der Verstärker seine obere Stellgrenze erreicht, ergibt sich der mit 3 gekennzeichnete Kurvenverlauf in Fig. 2b. Die obere Stellgrenze ist in dem Diagramm durch U Stell gekennzeichnet. Es wird also nur der Bereich zwischen der Linie 2 und Ul auf diese maximale Spannung U Stell verstärkt. Eine kleinere Verstärkung ergibt ein Ausgangssignal mit flacheren Flanken, gekennzeichnet durch den Kurvenverlauf 4. Das Verfahren ermöglicht somit durch Ändern der Verstärkung, die Steilheit der Flanken in weiten Bereichen einzustellen.

Fig. 3a zeigt wiederum den schon in Fig. 2a gezeigten zeitlichenVerlauf der Dreiecksspannung in Verbindung mit den Kommutierungsimpulsen. Fig. 3a zusammen mit Fig. 3b zeigen, wie Ansteuerungssignale mit verringerter Blocklänge erzeugt werden. Addiert man nämlich zu der Spannung Ul eine weitere Spannung U Block in dem Addierer 3 hinzu und bildet man das Differenzsignal zwischen dem Dreieckssignal und dieser Summenspannung Ul + U Block, so wird der effektiv zur Verstärkung kommende Teil der Dreiecksspannung im Diagramm von unten her abgeschnitten, was zu einer insgesamt verkürzten Blocklänge führt.

Der Vorgang zur Bildung von Signalen mit verkürzter Blocklänge wird nun genauer beschrieben. Die untere der beiden Linien 5 ist die Summenspannung UI + U Block. Wird die Verstärkung so gewählt, daß bei der Differenzspannung U5 - (U1 + U Block) der Operationsverstärker seine Stellgrenze U Stell erreicht, entsteht ein Ausgangssignal, das dem Kurvenverlauf 8 entspricht. Die untere der Linien 6 führt in analoger Weise zu dem Kurvenverlauf 7. Somit ist es möglich, mit der Blockspannung U Block, die Blocklänge zu verändern.

Mit der erfindungsgemäßen Schaltung und dem erfindungsgemäßen Verfahren kann somit auf einfache Weise die Flankensteilheit durch Variieren der Verstärkung eines Differenzverstärkers 4 und unabhängig davon durch Addition einer Blockspannung U Block in einem Addierer 3 die Blocklänge eingestellt werden.

## Patentansprüche

1. Schaltung zur Ansteuerung eines bürstenlosen Gleichstrommotors mit einem Dreiecksoszillator (1) zur Erzeugung einer Dreiecksspannung in Abhängigkeit von Kommutierungsimpulsen, die sich aus der Position des Rotors des Gleichstrommotors ergeben, dadurch gekennzeichnet, daß ein Abtast-Halteschaltkreis (2) zur Abtastung und zum Halten einer Haltespannung (Ul) aus dem zeitlichen Verlauf der Dreiecksspannung zum Zeitpunkt der Kommutierung und ein Differenzverstärker (4) zum Verstärken der Differenzspannung zwischen der Dreiecksspannung und der Haltespannung (Ul) vorgesehen sind, wobei das Ausgangssignal des Differenzverstärkers der Endstufe der Ansteuerung zugeführt wird.

2. Schaltung nach Anspruch 1, **gekennzeichnet durch** einen zusätzlichen Addierer (3) zum Addieren einer Spannung (U Block) zu der aus der Dreiecksspannung abgetasteten und gehaltenen Haltespannung (Ul), wobei in dem Differenzverstärker (4) die Differenzspannung zwischen der Dreiecksspannung und der Summe aus Haltespannung (Ul) und Blockspannung (U Block) verstärkt wird.

3. Schaltung nach Anspruch 1 oder 2, **dadurch gekennzeichnet**, daß die obere Stellgrenze (U Stell) des Differenzverstärkers (4) auf einen Wert eingestellt werden kann, der niedriger ist als der maximale verstärkte Wert der Differenzspannung.

4. Schaltung nach Anspruch 2 oder 3, **dadurch gekennzeichnet**, daß der Wert der addierten Blockspannung zwischen Null und dem maximalen Wert der Dreiecksspannung liegt.

5. Schaltung nach einem der vorhergehenden Ansprüche, **dadurch gekennzeichnet**, daß die Verstärkung des Differenzverstärkers (4) einstellbar ist.

6. Schaltung nach einem der vorhergehenden Ansprüche, **dadurch gekennzeichnet**, daß der Dreiecksoszillator (1) einen Kondensator, eine erste Stromquelle zur Aufladung des Kondensators und eine zweite Stromquelle zur Entladung des Kondensators aufweist.

7. Schaltung nach Anspruch 6, **dadurch gekennzeichnet**, daß die erste und die zweite Stromquelle Konstantstromquellen sind.

8. Schaltung nach Anspruch 6, **dadurch gekennzeichnet**, daß die Ströme der Konstantstromquellen proportional zu der Drehzahl des Rotors sind.

9. Verfahren zum Ansteuern eines bürstenlosen Gleichstrommotors mit einer periodischen Spannung, deren zeitlicher Verlauf durch Spannungsblöcke bestimmter Länge gebildet ist, die steigende und abfallende Flanken haben, dadurch gekennzeichnet, daß die Steilheit der Flanken durch Variieren der Verstärkung eines Differenzverstärkers (4) eingestellt wird.

10. Verfahren nach Anspruch 9, dadurch gekennzeichnet, daß die obere Stellgrenze (U Stell) des Differenzverstärkers (4) auf einen Wert eingestellt wird, der niedriger ist als der maximale verstärkte Wert der an den Differenzverstärker (4) angelegten, zu verstärkenden Differenzspannung.

## Claims

1. Circuit for driving a brushless DC motor having a triangular-waveform oscillator (1) for producing a triangular-waveform voltage as a function of commutation pulses which result from the position of the rotor of the DC motor, characterized in that a sample and hold circuit (2) is provided for sampling and for holding a hold voltage (Ul) from the time profile of the triangular-waveform voltage at the time of commutation, and a differential amplifier (4) is provided for amplifying the difference voltage between the triangular-waveform voltage and the hold voltage (Ul), the output signal from the differential amplifier being supplied to the output stage of the drive.

2. Circuit according to Claim 1, characterized by an additional adder (3) for adding a voltage (U Block) to the hold voltage (Ul) which is sampled from the triangular-waveform voltage and is held, in which case the differential amplifier (4) is used to amplify the difference voltage between the triangular-waveform voltage and the sum of the hold voltage (Ul) and the block voltage (U Block).

3. Circuit according to Claim 1 or 2, characterized in that the upper control limit (U control) of the differential amplifier (4) can be set to a value which is less than the maximum amplified value of the difference voltage.

4. Circuit according to Claim 2 or 3, characterized in that value of the added block voltage is between zero and the maximum value of the triangular-waveform voltage.

5. Circuit according to one of the preceding claims, characterized in that the gain of the differential amplifier (4) is adjustable.

6. Circuit according to one of the preceding claims, characterized in that the triangular-waveform oscillator (1) has a capacitor, a first current source for charging the capacitor, and a second current source for discharging the capacitor.

7. Circuit according to Claim 6, characterized in that the first current source and the second current source are constant-current sources.

8. Circuit according to Claim 6, characterized in that the currents from the constant-current sources are proportional to the rotational speed of the rotor.

9. Method for driving a brushless DC motor with a periodic voltage whose time profile is formed by voltage blocks of specific length which have rising and falling flanks, characterized in that the gradient of the flanks is adjusted by varying the gain of a differential amplifier (4).

10. Method according to Claim 9, characterized in that the upper control limit (U control) of the differential amplifier (4) is set to a value which is less than the maximum amplified value of the difference voltage which is applied to the differential amplifier (4) and is to be amplified.

## Revendications

1. Circuit servant à commander l'amorçage d'un moteur à courant continu sans balais comprenant un oscillateur monté en triangle (1), servant à produire une tension en delta en fonction d'impulsions de commutation, qui proviennent de la position du rotor du moteur à courant continu,
caractérisé en ce qu'
on prévoit un circuit de balayage et de maintien (2) pour balayer et pour maintenir une tension de maintien (UI) à partir du déroulement dans le temps de la tension en delta à l'instant de la commutation et un amplificateur différentiel (4) qui sert à amplifier la tension différentielle comprise entre la tension en delta et la tension de maintien (UI), le signal de sortie de l'amplificateur différentiel étant amené à l'étage final de la commande d'amorçage.

2. Circuit selon la revendication 1,
caractérisé par
un additionneur supplémentaire (3), qui sert à additionner une tension (U Block) à la tension de maintien (UI) balayée et maintenue à partir de la tension en delta, en amplifiant dans l'amplificateur différentiel (4) la tension différentielle comprise entre la tension en delta et la somme de la tension de maintien (UI) et de la tension de bloc (U Block).

3. Circuit selon la revendication 1 ou 2,
caractérisé en ce que
la limite supérieure de réglage (U Stell) de l'amplificateur différentiel (4) peut être réglée sur une valeur qui est plus basse que la valeur maximale amplifiée de la tension différentielle.

4. Circuit selon la revendication 2 ou 3,
caractérisé en ce que
la valeur de la tension de bloc additionnée est comprise entre zéro et la valeur maximale de la tension en delta.

5. Circuit selon l'une des revendications précédentes,
caractérisé en ce qu'
on peut régler l'amplification de l'amplificateur différentiel (4).

6. Circuit selon l'une des revendications précédentes,
caractérisé en ce que
l'oscillateur monté en triangle (1) présente un condensateur, une première source de courant servant à charger le condensateur, et une deuxième source de courant servant à décharger le condensateur.

7. Circuit selon la revendication 6,
caractérisé en ce que
la première source de courant et la deuxième source de courant sont des sources de courant continu.

8. Circuit selon la revendication 6,
caractérisé en ce que
les intensités des sources de courant continu sont proportionnelles à la vitesse de rotation du rotor.

9. Procédé servant à commander l'amorçage d'un moteur à courant continu sans balais par une tension périodique, dont le déroulement dans le temps est formé par des blocs de tension de longueurs déterminées, qui ont des flancs montants et retombants,
caractérisé en ce que
la raideur des flancs est réglée en faisant varier l'amplification d'un amplificateur différentiel (4).

10. Procédé selon la revendication 9,
caractérisé en ce que
la limite supérieure de réglage (U Stell) de l'amplificateur différentiel (4) est réglée sur une valeur, qui est plus basse que la valeur maximale amplifiée de la tension différentielle appliquée à l'amplificateur différentiel (4), à amplifier.
